# EUROPEAN PATENT APPLICATION

(11) **EP 3 117 889 A2**
(43) Date of publication of application: **18.01.2017**
(21) Application number: 16166532.8
(22) Date of filing: 22.04.2016
(51) Int. Cl.: B01D 53/14, B01D 53/62

(54) **CARBON DIOXIDE RECOVERY**

(30) Priority: 14.07.2015 US 201514798827
(71) Applicant: Stauffer, John E., Greenwich, CT 06830 (US)
(72) Inventor: Stauffer, John E., Greenwich, CT 06830 (US)
(74) Representative: Schaumburg und Partner Patentanwälte mbB

(57) **Abstract**

Carbon dioxide is separated from flue gas by scrubbing the gas with an aqueous solution of ammonia and salt, and the CO₂ is therefore released from the solution by heating.

## Description

### FIELD OF THE INVENTION

The present invention relates to a process for the recovery of carbon dioxde from flue gases. The process uses an aqueous solution of salt and an amine to scrub the flue gas and absorb carbon dioxide. The resulting solution is regenerated by heating it in order to strip out pure carbon dioxide gas.

### BACKGROUND

There is a widespread concern for climate change characterized by environmental warming. Although the trend has been attributed to a number of causes, the greatest attention has been directed to the release of greenhouse gases. Chief among these gases is carbon dioxide because of its ability to trap heat.

With the growing concern about an increased concentration of carbon dioxide in the atmosphere, there is a movement to reduce the emissions of this greenhouse gas. The effort is being waged under the banner of "Carbon Capture and Storage," or "Carbon Capture and Sequester," also known as "CCS" for short. Success in this endeavor requires either the avoidance of carbon dioxide generation in the first place or the recovery of this gas from industrial processes. The most notable example is electric power generation.

Technology presently exists for the recovery of carbon dioxide from exhaust gas, but to date the application of this know-how has been limited. The primary target for this technology is the combustion of fossil fuels including coal, oil and natural gas. All three fuels are of concern, but coal has received the brunt of criticism because it is one hundred percent carbon and also because it poses other environmental risks due to such impurities as sulfur and mercury.

Focusing on the recovery of carbon dioxide while ignoring questions of storage and disposal, two approaches for carbon capture have been proposed. Carbon dioxide can either be recovered by adsorption on a solid sorbent or dissolved in an aqueous solution. In the first instance, such solid materials as activated carbon, Small zeolites, and metal organic frameworks are used to bind the carbon dioxide. Adsorption, however presents certain challenges. Care must be taken to avoid attrition of the solid sorbent. Additionally, significant energy is required to regenerate the sorbent. Either pressure swings or the heating of the sorbent to release the adsorbed gas is required.

The second method of carbon capture depends on the absorption of carbon dioxide in a solvent. In this application, an aqueous solution of an amine is most commonly used. The amine of choice is monoethanolamine. While the solvent is efficient in scrubbing flue gases, its regeneration presents a problem. Relatively high temperatures are required to strip carbon dioxide from pregnant solutions.

In summary, the available technology for carbon capture has a number of drawbacks. These handicaps are most serious in large scale facilities. The result is poor economics, which has held back the exploitation of current methodology.

The future prospect for carbon capture is very much dependent on the introduction of process improvements. The need for such advancements is all too apparent. Therefore, it is an object of the present invention to fulfill such aspirations. These and other objects and goals will become apparent from the following description and the drawing included therewith.

### BRIEF DESCRIPTION OF THE DRAWING

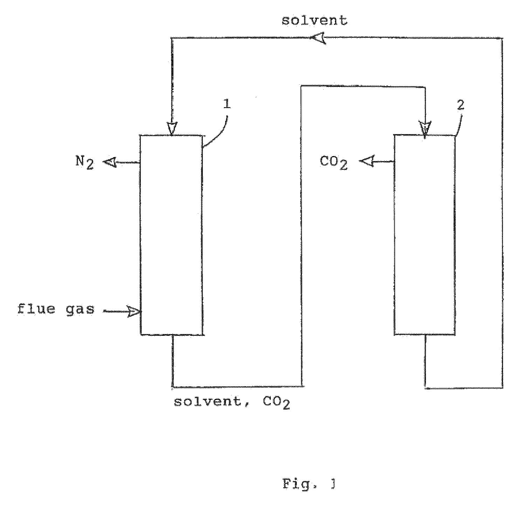

Figure 1 is a schematic rendering of the process showing the major pieces of equipment that are used in an installation as well as the lines connecting this equipment.

### DETAILED DESCRIPTION

The present invention can best be appreciated by reviewing the relevant chemistry. Chemical reactions that occur are unique to the process. They indicate the principal advantages, namely, the efficiency in removing carbon dioxide from a gas stream and the ease with which the solvent can be regenerated.

In the first step of the process when the gas stream is contacted with the aqueous solution, the following chemical reactions take place.
1.

   NH3 + CO₂ + H₂O -+ NH4 HC03
2.

   NH4 HC03 +NaCl -+ NaHC03 +NH4 Cl

In the first equation, ammonia reacts rapidly with carbon dioxide and water to provide ammonium bicarbonate. The second equation shows the rearrangement of ammonium bicarbonate with salt to give sodium bicarbonate and ammonium chloride. By combining these two reactions, the following expression is obtained for the overall reaction in the absorption step.
3.

   NH₁ + CO₂ + H₂O +NaCl → NaHCO₃ + NH₄ Cl

The regeneration of the aqueous solution is shown by the following two equations.
4.

   2 NaHCO₃ → Na₂ CO₃ + H₂ O + CO₂ ↑
5.

   Na2 C03 + NH4Cl → NaHC03 +NaCl +NH3

The decomposition of sodium bicarbonate to give sodium carbonate and release carbon dioxide is indicated by equation 4. This reaction occurs under the aplication of heat. Finally, sodium carbonate, strongly alkaline in solution, reacts with ammonium chloride to form sodium bicarbonate, salt, and ammonia. When equations 4 and 5 are combined, the following equation is obtained showing the regeneration process.
6.

   NaHCO₃ +NH₄Cl -> NH₃ +NaCl +H2 0 + CO₂ **I**

As one can see from this expression, the resulting solution containing ammonia and salt is identical to the solution used in scrubbing carbon dioxide shown in equation 3. Thus, the regenerated solution can be recycled to the absorption step.

The conditions of the process are all-important. The absorption step is conducted at atmospheric pressure or close to this level. The temperature for absorption is in the range of about 15°C. to approximatley 50° C. Below this range, sodium bicarbonate begins to precipitate from solution causing fouling of the equipment. Above this range, carbon dioxide is released.

This regenerative step uses relatively mild conditions. The pressure of the process remains the same as in step one. The temperature is raised to a point in the range of 500° C. to 120° C., but a level below boiling is generally sufficient for the complete evolution of carbon dioxide.

Because of the limited solubility of sodium bicarbonate, sodium chloride in the scrubbing solution can be replaced by potassium chloride. The resulting chemistry is essentially the same.

Also, an amine can be substituted for ammonia in the process. For example, n-propylamine has a boiling point of 49° C. and is miscible in water. Recourse to the common solvent monoethanolamine is also possible.

A better appreciation of the present invention can be gained by reference to Figure 1. This diagram illustrates the principal features of the process. Flue gas enters the base of absorption column 1. Nitrogen exits the top of the column, and solvent loaded with carbon dioxide is pumped from the bottom of the column to the head of stripping column 2. In the latter unit, carbon dioxide is released after the temperature of the solvent is raised in a heat exchanger (not shown).

### EXAMPLE

Half a cup of ammonia solution used by consumers as an "all purpose cleaner" was added to half a cup of sparkling carbonated water. After complete mixing, 114 teaspoon of salt was added to the solution and stirred vigorously. No bubbles appeared. Next, the solution was heated. Considerable foaming occurred shortly before the solution began to boil.

### SUMMARY

The present invention comprises an absorption process for the recovery of carbon dioxide from flue gas and other exhaust gases. The process is a two-step procedure. It depends on the use of an aqueous solution of ammonia and salt to absorb carbon dioxide.

The present invention comprises an absorption process for the recovery of carbon dioxide from flue gas and other exhaust gases. The process is a two-step procedure. It depends on the use of an aqueous solution of ammonia and salt to absorb carbon dioxide.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A process for recovering carbon dioxide from flue gas comprising the steps of:
a. scrubbing the gas with an aqueous solution of ammonia and salt; and therefore,
b. heating the saturated solution to release carbon dioxde.

2. A process for recovering carbon dioxide from flue gas including the steps of:
a. scrubbing the gas with an aqueous solution of n-propylamine and salt; and therefore,
b. heating the saturated solution to release carbon dioxide.

3. A process for recovering carbon dioxide from flue gas including the steps of:
a. scrubbing the gas with an aqueous solution of ammonia and potassium chloride; and therefore,
b. heating the saturated solution to release carbon dioxide.
